# EUROPEAN PATENT APPLICATION

(11) **EP 2 884 020 A1**
(43) Date of publication of application: **17.06.2015**
(21) Application number: 13196604.6
(22) Date of filing: 11.12.2013
(51) Int. Cl.: E04C 2/284, E04C 2/38, E04B 1/84

(54) **An acoustic element comprising a molded hollow shell structure and a method for producing the same**

(71) Applicant: Lumir Oy, 00100 Helsinki (FI)
(72) Inventor: Silfverhuth, Esa, 01300 Vantaa (FI); Saastamoinen, Tomi, 02650 Espoo (FI)
(74) Representative: Seppo Laine Oy

(57) **Abstract**

The present invention relates to an acoustic element comprising a dry molded hollow shell structure and an acoustic filler(s), and a method for producing such acoustic element. The shell of the invention is designed to incorporate acoustic fillers thus reducing an excessive use of binding agents. The shell consists of renewable and/or recycled materials and together with acoustic filler(s) provides a versatile acoustic element with excellent acoustic properties. The element can be easily adjusted to fulfill the acoustic needs of various sound proof requiring spaces.

## Description

### Field of the invention

The present invention relates to a molded shell structure, which is designed to bind acoustic materials. Particularly the present invention relates to an improved method for producing an acoustic element, comprising a hollow shell for incorporating an acoustic filler material(s), which together provide a single solid acoustic element.

### Description of prior art

When designing and constructing interior wall and ceiling structures increasingly more attention is paid to the acoustics of the space. Naturally, functioning acoustics are a prerequisite, for example, in concert halls, but the acoustics also have significant impacts on the levels of satisfaction, work efficiency, and even human health, for example, in homes, schools, and workplaces. Since structural solutions cannot be selected on the terms of acoustics alone, different elements or surfaces, which are installed in these spaces and particularly on the wall and ceiling surfaces of any rooms after the actual construction stage, are needed.

Consequently, more attention than before is paid to noise levels, i.e., sound absorption in the vicinity of machines that are running.

A primary functional requirement for any acoustic surface or element is naturally that it has suitable acoustic properties. Generally, this signifies a sound absorption that is sufficiently strong or has a frequency response of a suitable form.

Since the acoustic elements and surfaces are structures that remain in sight, their architectural image should, however, also be suitable for their environment and the other surfaces of the space. The thickness of the panel or surface should remain within reasonable limits, mainly due to the increasing weight obtained with higher thicknesses, which on the other hand is inconsistent with the high requirement of sound absorption, as a stronger sound absorption is obtained with higher thicknesses.

Naturally, the acoustic elements or surfaces should also fulfil the criteria of purity, which is set for the surface materials of interiors, and they should also have mechanical and physical properties that are suitable for their environment of use. Similarly to other structural elements, the requirement of considering environmental aspects, to an increasing extent, also applies to the surfaces and elements of indoor spaces, for example with respect to the manufacture and recyclability of the materials.

The most common commercially available, ready-made acoustic elements include mineral wool-based (fibreglass or rock wool-based) acoustic panels. On the visible surfaces of these, the surface of the mineral wool is coated, for example with paper, plastic, fabric or glass fleece. Being relatively light-weight components, these acoustic elements, which are based on insulating wool panels, are simple to install, for example on the ceiling or interior walls of the space that is to be provided with sound absorption. They are installed either as separate elements or as an unbroken surface. They can also be formed into acoustic planes that are lowered down from the ceiling.

The wool panel of these prior solutions should also be properly covered on the surfaces of its edges, both due to its appearance and to prevent any mineral dust from being released into the surrounding space. With time, the seams of these panels will darken and, thus, become visible. A film coating is therefore not sufficient, but in practise, in the case of separate acoustic elements, cover strips or the like are used, which complicate the manufacture and installation of the element and increase the costs.

The sound absorption ability of mineral wool is moderate, but particularly at low frequencies an efficient absorption may require an impractically thick panel. In conventional cases, absorption structures with a thickness of about 50 mm are functional, but in demanding spaces, layers of over 100 mm in thickness may be needed. With mineral wool, it is also difficult to meet the ecological demands.

For the coating of walls, ceilings or the like in different interiors, various fibre-based coatings are known, which are sprayed or applied in another way and which provide a mechanical surface structure that is more elastic and durable than glass and rock-based coatings, and which can also contribute to the acoustics of the premises.

For example, FI 95041 and WO 2007/063178 disclose natural fibre-based coatings that are sprayed onto a surface as aqueous mixtures, or applied in another similar manner, and hardened through drying. The fibre of the coating of FI 95041 comprises fine cellulose fibre. In the solution of WO2007/063178, in addition to the fibre material and the binder, the coating includes particle-like, typically mineral-based fillers, by means of which the surface of the coating becomes smooth and which can adjust its acoustic properties.

The known solutions however have their limitations, regarding not only the acoustic properties, but also the binding of the acoustic mass together into an element. When the sound absorption is to be improved, the thickness of the coating should be increased. In addition to the adverse aspects of appearance, this increases the mass of the coating per unit area. On the other hand the known acoustic elements require substantial amounts of binders and gluing agents for acoustic mass binding purposes.

### Brief description of the invention

It is an object of the present invention to provide an improved method for producing an advanced acoustic element, such as a decorative panel, for improving the acoustic properties of interior spaces.

Particularly, the invention is based on a molded hollow shell structure for incorporating acoustic filler materials or acoustic mass and forming an acoustic element. Acoustic materials are preferably formed from a porous structure containing mostly air, whereby a light weighted element can be produced.

More specifically, the acoustic element of the present invention is characterized by what is presented in the characterizing part of claim 1, the method for producing an acoustic element is characterized by what is presented in the characterizing part of claim 10, the use of such acoustic element is characterized by what is stated in claim 16 and the shell structure of the invention is characterized by what is presented in claim 17.

The present invention has various advantages over prior art. One particular advantage is that because of using a shell structure as a binding element for acoustic materials, amounts of glues and/or binding resins can be reduced. The shell is produced to a dry form which is essential for enabling an acoustic element to provide effective acoustic properties. In addition the shell is preferably made from renewable and/or recycled materials, which saves material costs and thus makes the elements more economical and environmentally friendly to produce.

Next the invention is described more closely by the following detailed description and the appended drawings.

### Brief description of the drawings

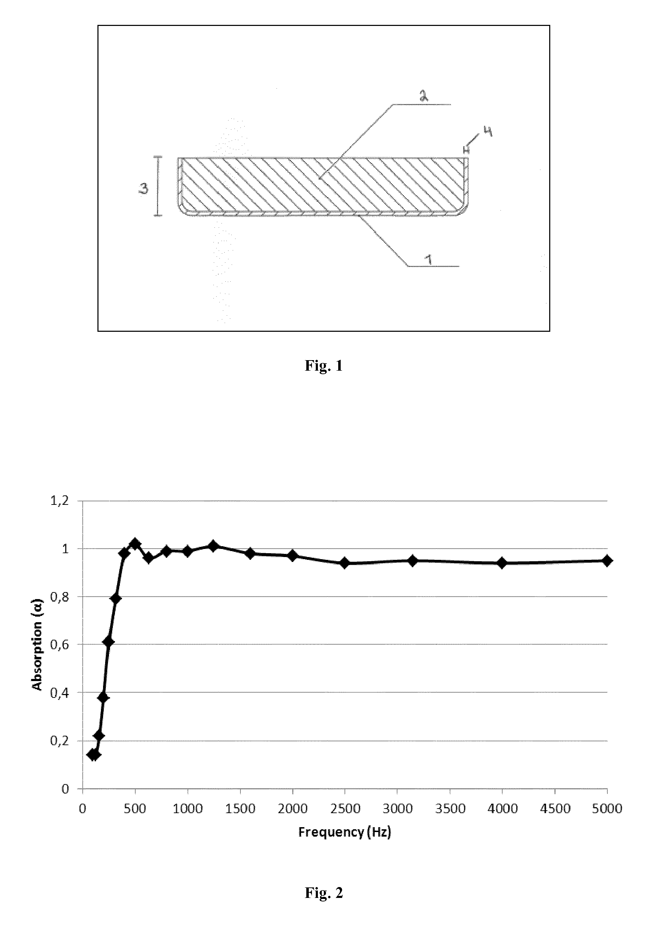

Figure 1 describes an acoustic element wherein a molded shell (1) binds acoustic fillers, binders and other additives (filler material 2), which together form a single element after their adhering by increased temperature. Reference number (3) refers to a thickness of the element and (4) refers to a thickness of a shell edge.
Figure 2 is a diagram describing the acoustic properties of an acoustic element according to the present invention.

### Detailed description of embodiments of the invention

The present invention relates to a hollow shell structure incorporating an acoustic filler material, which together form a single solid acoustic element. In the method of the present invention a renewable and/or recycled material is first subjected to pressure to form a dry molded hollow shell structure. In the next step one or more acoustic filler(s) and one or more binder(s) are introduced inside the shell structure, followed by applying an increased temperature to activate the binder(s) and optionally the acoustic filler(s), thus inducing their adhering to the shell structure to form a single solid acoustic element.

"Acoustic filler" is herein intended to mean a compound, a composition or a mixture of acoustic materials or acoustic mass, capable of absorbing sound waves sufficiently or has a frequency response of a suitable form, thus being principally responsible for the acoustic properties of an acoustic element or such.

The shape of the shell structure is formed by subjecting a renewable and/or a recycled material or their combination or mixture to pressure for example by pressing the material between a female die and a male die, both dies having a predetermined shape. According to a preferred embodiment the molded shell structure is formed by administering the renewable/recycled material to a mold having a predetermined shape and depth preferably by means of spraying, followed by drying, or without the drying step by dry-pressing with hot air. Thus, according to one aspect of the present invention the molded hollow shell structure has at least one cavity with a predetermined shape, such as a plate-like shape, whereas the cavity has at least one opening defined by edges. The edges are preferably pressed to equal thicknesses, the final thickness thereby being between 2 to 15 mm, preferably between 2 to 8 mm and most preferably about 4 mm. A thin shell edge enables the shell to dry quickly.

Particularly, the molded shell structure is sound permeable, whereby the acoustic properties of the acoustic element are amendable principally with the acoustic filler(s) that is used. The acoustic properties of the element can also be amended by altering the thickness of the element, for example by designing the pressing dies or molds to a desired height/depth, depending on the end use of said element. For example, a thicker element (i.e. higher shell) is able to intake more acoustic fillers compared to a thinner element thus providing increased sound absorption, and vice versa. Herein it is preferred to produce elements with thickness between 2 to 50 mm, preferably between 10 to 40 mm.

Table 1 below describes excellent absorption properties for an acoustic element having thickness of 30 mm, wherein the element comprises a molded acoustic shell filled with acoustic fibre-based fillers according to the present invention.

**Table 1. Acoustic properties of an element at frequency levels between 100 and 5000 Hz.**

| Frequency (Hz) | Absorption value α |
|---|---|
| 100 | 0.14 |
| 125 | 0.14 |
| 160 | 0.22 |
| 200 | 0.38 |
| 250 | 0.61 |
| 315 | 0.79 |
| 400 | 0.98 |
| 500 | 1.02 |
| 630 | 0.96 |
| 800 | 0.99 |
| 1000 | 0.99 |
| 1250 | 1.01 |
| 1600 | 0.98 |
| 2000 | 0.97 |
| 2500 | 0.94 |
| 3150 | 0.95 |
| 4000 | 0.94 |
| 5000 | 0.95 |

The present invention preferably utilizes renewable and/or recycled materials, or mixtures thereof, in the production of a shell structure, which in later stage binds and incorporates the acoustic filler(s) and additives. Such renewable materials include for example natural non-synthetic fibrous materials, preferably obtained from biomass, for instance cellulose-based materials such as wood pulp. Recycled materials such as a mass from cardboard or paper waste or material mixtures from plastic waste may also be used either alone or in a combination with any materials described above.

According to one embodiment organic materials such as natural fibrous matter including cellulose-based materials like e.g. wood pulp, recycled paper or cardboard mass, or inorganic materials such as plastic grains, mineral wool, fibreglass or rock wool, or any mixture or combination thereof, can be used as an acoustic filler(s). The filler or a mixture or combination of fillers is preferably introduced inside the shell structure in at least an essentially dry form, in order not to cause wetting damage to the shell. Filler material can also be pre-treated with a binder(s) and/or a gluing agent(s) and dried before applying it inside the shell. Pre-treatment may improve the adhering of the filler to the shell.

As being said above, plastic grains can be used as fillers. They are preferably formed of expandable polymers, such as polyethylene, polyurethane, polystyrene, cellulosic derivatives, or copolymers thereof, particularly in cross-linked form, preferably a cross-linked polyethylene. Alternatively, such previously modified cellular grains can be used, particularly of a closed-cell type, whereby no air or sound-waves can penetrate the "walls" of the grains. Suitable plastic grains and acoustic filler compositions are described for example in the Finnish patent application FI 20115032 (or WO 2012/095562).

According to a further option, flame-proofed alternatives of said polymeric materials are used already in the cross-linking stage of the polymers, whereby it will not be necessary to add fire retardants as additive(s) in later stages of production.

In addition to these cellular grains, the final structure can optionally contain also plastics or other polymers in other forms (particularly selected from non-expandable polymers). These can function, among others, as binders, further fillers, fire retardants, functionalizing agents or curing agents.

The binder(s) of the present structure can be 1-component or 2-component binders, and are preferably selected from dispersion-type and dry (powdery) glues, particularly being essentially insoluble in water at room temperature, instead forming dispersions. Examples of suitable binders are carboxy-methyl cellulose, hydroxypropyl cellulose, methyl cellulose, ethylene vinyl acetate, polyvinyl alcohol, polyvinyl acetate, polyvinyl chloride, polyolefins, various starches and latexes, as well as derivatives and mixtures thereof, preferably being of the dispersion type, such as 1- or 2-component dispersion glues, particularly selected from the described olefin or vinyl polymers. The binder is typically used in a content of 1-15 % by weight, preferably 1-10 % by weight. According to one embodiment it is preferred to use resin-based binders.

Further additives can be included into the structure of the invention, either during the manufacture of the plastic grains or during the formation of the final moulded structure. These can include, for example, one or more fire retardants, preferably selected from the group of magnesite, boron-based substances, such as boric acid or borax or a mixture thereof, hydroxides, such as aluminum or magnesium hydroxide or a mixture thereof, most suitably in an amount of 1 to 20 % by weight of the dry matter (essentially by weight of the final structure). Also one or more curing agents can be used to chemically cure the binder.

The shell comprising the acoustic filler and possible additional materials are combined together to form a solid acoustic element by applying heat to the produced structure. According to an embodiment of the invention temperatures below 200 °C, preferably between 25 to 190 °C, more preferably between 50 to 140 °C and most suitably from 40 to 60 °C are used for activating the binder(s) and optionally the acoustic filler materials.

The acoustic elements of the present invention can be designed with various surface structures e.g. by using different pressing dies or molds in the shell production. Shells can also be colored by adding color agents to fit the needs of the space of interest, to which the element is to be attached.

In addition, the relative frequency response of the sound absorption (of a part of an interior wall or a ceiling of a space) is most suitably adjusted to correspond to a predefined frequency response.

A person skilled in the art should be fully aware that various changes may be made and therefore the invention is not intended to be limited only to the description and preferred embodiments presented above, but can be freely be implemented within the scope of the appended claims.

### Citations - patent literature

1. FI 95041
2. WO 2007/063178
3. FI 20115032 (WO 2012/095562)

## Claims

1. An acoustic element, **characterized in that** the element comprises a molded hollow shell structure incorporating one or more acoustic filler(s) and one or more binders, wherein the molded shell is made from renewable or recycled materials.

2. The element according to claim 1, **characterized in that** shell materials include natural fibrous matter, such as cellulose-based materials, preferably wood pulp, recycled paper and cardboard waste or recycled plastic waste.

3. The element according to claim 1 or 2, **characterized in that** the shell structure is sound permeable and the element has an absorption value α of at least 0.80, preferably at least 0.90 at a frequency level between 400 to 5000 Hz.

4. The element according to any of claims 1 to 3, **characterized in that** the shell comprises a structure defined by edges, which preferably have equal thicknesses between 2 to 15 mm, preferably between 2 to 8 mm.

5. The element according to any preceding claims, **characterized in that** the element has a thickness between 2 to 50 mm, preferably between 10 to 40 mm.

6. The element according to any preceding claims, **characterized in that** the shell has a predetermined shape, such as a plate-like shape.

7. The element according to any preceding claims, **characterized in that** the acoustic filler(s) consist of organic or inorganic materials comprising for example cellulosed-based materials, recycled paper mass, natural fibrous matter, plastic grains, mineral wool, fiberglass or rock wool, or a combination thereof.

8. The element according to any of preceding claims, **characterized in that** the binder(s) are selected from resin-based binders, carboxy-methyl cellulose, hydroxypropyl cellulose, methyl cellulose, ethylene vinyl acetate, polyvinyl alcohol, polyvinyl acetate, polyvinyl chloride, polyolefins, various starches, as well as derivatives and mixtures thereof.

9. The element according to any of the preceding claims, **characterized in** further comprising one or more fire retardants, preferably selected from the group of magnesite, boron-based substances, such as boric acid or borax or a mixture thereof, hydroxides, such as aluminum or magnesium hydroxide or a mixture thereof, most suitably in amount of 1 to 20 % by weight of the dry matter.

10. A method for producing an acoustic element according to any of claims 1 to 9, **characterized in that** the method includes the following steps:
- subjecting a renewable material, a recycled material or a combination thereof to a mold to form a dry molded hollow shell structure,
- introducing one or more acoustic filler(s) and one or more binder(s) inside the shell structure, and
- applying an increased temperature to activate the binder(s) and optionally the acoustic filler(s) and inducing its/their adhering to the shell structure to form a single solid element.

11. The method according to claim 10, **characterized in that** the shell structure is formed by administering the renewable material, recycled material or a combination thereof to a mold having a predetermined shape and a depth between 2 to 50 mm preferably by spraying, followed by drying, or by dry-pressing.

12. The method according to claim 10 or 11, **characterized in that** the renewable material, recycled material or a combination thereof is pressed to an edge thickness between 2 to 15 mm, preferably between 2 to 8 mm.

13. The method according to any of claims 10 to 12, **characterized in that** the acoustic filler(s) is introduced inside the shell in an essentially dry form.

14. The method according to any of claims 10 to 13, **characterized in** the acoustic filler is pre-treated with a binder(s), a fire retardant(s) and/or a gluing agent(s) before introducing it inside the shell structure.

15. The method according to any of claims 10 to 14, **characterized in that** temperatures from 25 to 190 °C, preferably from 50 to 140 °C, and most suitably from 40 to 60 °C are applied for activating the binder(s) and optionally the acoustic filler(s).

16. Use of the element according to any of claims 1 to 9 as a part of an interior wall or a ceiling of a space to adjust the relative frequency response of the sound absorption of the space to correspond to a predefined frequency response.

17. A molded hollow shell structure **characterized in** having at least one cavity and a predetermined shape, whereas the cavity has at least one opening and is defined by edges and wherein the shell is consisting of renewable materials, recycled materials or a combination thereof, the material preferably being a natural fibrous material, such as cellulose-based material, most suitably wood pulp or paper mass, for use in binding acoustic filler material(s).
